# EUROPÄISCHE PATENTSCHRIFT

(11) **EP 3 774 425 B1**
(45) Veröffentlichungstag und Bekanntmachung des Hinweises auf die Patenterteilung: **16.11.2022**
(21) Anmeldenummer: 19716137.5
(22) Anmeldetag: 04.04.2019
(51) Int. Cl.: B60K 6/387, B60K 6/40, B60K 6/48, B60W 10/02, B60K 17/02, F16C 35/06

(54) **LAGERUNG FÜR EIN HYBRIDMODUL**
BEARING UNIT FOR A HYBRID MODULE
SUPPORT POUR UN MODULE HYBRIDE

(30) Priorität: 11.04.2018 DE 102018205471
(43) Veröffentlichungstag der Anmeldung: 17.02.2021
(73) Patentinhaber: ZF Friedrichshafen AG, 88046 Friedrichshafen (DE)
(72) Erfinder: RÖSSNER, Monika, 97499 Donnersdorf (DE); VIERNEKES, Gerald, 97437 Hassfurt (DE); KUNDERMANN, Wolfgang, 65599 Dornburg-Dorndorf (DE); GROSSPIETSCH, Wolfgang, 97422 Schweinfurt (DE); BREHMER, Martin, 88069 Tettnang (DE); SCHMIDT, Thilo, 88074 Meckenbeuren (DE); RIEDISSER, Thomas, 88138 Sigmarszell (DE)
(86) Internationale Anmeldenummer: PCT/EP2019/058447
(87) Internationale Veröffentlichungsnummer: WO 2019/197250

(56) Entgegenhaltungen:
- DE-A1-102009 019 585
- JP-A- 2006 298 272
- US-A1- 2008 023 287
- US-A1- 2011 240 431

## Beschreibung

Die Erfindung betrifft die Lagerung in einem Hybridantriebsmodul für ein Kraftfahrzeug, wobei das Hybridmodul zwischen einem Verbrennungsmotor und einem Getriebe angeordnet ist und eine elektrische Maschine aufweist.

Im Stand der Technik sind verschiedene Bauformen von Hybridmodulen bekannt. Hierbei sind die bewegten Teile wie Dämpfernabe oder Rotorträger am ruhenden Gehäuse abgestützt. Beispielsweise sind in EP 1 736 345 A1 verschiedene Varianten gezeigt, wie die Bauteile am Gehäuse gelagert werden können. Aus DE 10 2006 034 945 A1 wird beispielsweise eine Gehäusezwischenwand zur Abstützung des Rotors gelehrt. Nachteilig am Stand der Technik ist der benötigte Bauraum, die aufwendige Gehäusefertigung sowie der Montageaufwand.

Aufgabe der Erfindung ist es daher ein Hybridmodul bereitzustellen, welches weniger Bauraum, insbesondere in axialer Richtung, benötigt, einfacher herzustellen und zu montieren ist.

Die Aufgabe wird gelöst durch die Merkmale des unabhängigen Patentanspruchs. Vorteilhafte Ausgestaltungen ergeben sich aus den Unteransprüchen, der Beschreibung sowie aus den Figuren.

Erfindungsgemäß ist ein Hybridmodul umfassend eine Dämpfernabe, welche mit einem Verbrennungsmotor verbunden ist, ein Gehäuse, eine Kupplung, eine elektrische Maschine, welche einen Rotor und einen mit dem Gehäuse verbundenen Stator aufweist, einen Drehmomentwandler, welcher ein mit einer Zentralnabe verbundenes Wandlergehäuse und eine Turbinenwelle aufweist, und eine Abtriebswelle, wobei der Rotor der elektrischen Maschine mit der Zentralnabe oder dem Wandlergehäuse verbunden ist, wobei die Turbinenwelle drehfest mit der Abtriebswelle verbunden ist, und wobei die Kupplung zwischen der Dämpfernabe und dem Drehmomentwandler angeordnet ist, dadurch gekennzeichnet, dass die Zentralnabe über zumindest ein Lager an der Abtriebswelle abgestützt ist und über zumindest zwei Lager an der Dämpfernabe abgestützt ist, und dass die Dämpfernabe mit zumindest einem Lager am Gehäuse abgestützt ist.

Bei einem Hybridmodul werden zwei unterschiedliche Antriebsquellen für eine Anwendung verwendet, wobei diese alternativ oder kumulativ betrieben werden können. Eine verbreitete Kombination ist ein Verbrennungsmotor und eine elektrische Maschine. Das Hybridmodul führt hierbei den oder die Kraftflüsse an den folgenden Verbraucher, wie beispielsweise einem Antriebsstrang eines Fahrzeugs, weiter.

Um eine Krafteinleitung vom Verbrennungsmotor zu ermöglichen, weist das Hybridmodul eine Dämpfernabe auf, welche mit dem Verbrennungsmotor verbunden ist. Durch die Dämpfernabe kann eine Drehbewegung an eine Kupplung weitergegeben werden. Die Kupplung hat die Aufgabe, den Verbrennungsmotor vom Antriebsstrang abzukoppeln, wenn der Verbrennungsmotor abgeschalten ist, um Verluste zu vermeiden.

Die Kupplung ist ebenso wie eine elektrische Maschine in einem Gehäuse angeordnet, wobei der Stator der elektrischen Maschine mit dem Gehäuse verbunden ist. Der Rotor der elektrischen Maschine ist als weitere Antriebsquelle im Kraftfluss nach der Kupplung angeordnet und mit der Eingangsseite eines Drehmomentwandlers verbunden. Die Verbindung mit dem Drehmomentwandler erfolgt über das Wandlergehäuse und der Rotor kann entweder direkt diesem oder einer mit diesem verbundenen Zentralnabe vorgesehen werden, wobei auch Ausführungsformen eingeschlossen sind, bei denen der Rotor über einen Rotorträger mit der Zentralnabe oder dem Wandlergehäuse verbunden ist.

Die Ausgangsseite des Drehmomentwandlers wird von einer Turbinenwelle gebildet, welche mit der Abtriebswelle drehfest verbunden ist. Über die Abtriebswelle ist das Hybridmodul mit dem weiteren Antriebsstrang, wie einem Getriebe, insbesondere einem Automatikgetriebe, verbunden.

Die Dämpfernabe sowie die Zentralnabe sind als Hohlwellen ausgebildet, welche koaxial verlaufen und zumindest abschnittsweise übereinander geschoben sind, wodurch sie in axialer Richtung überlappen. Die Lagerung ist hierbei durch zumindest ein Lager gegeben, mit welchem die Zentralnabe an einem Innendurchmesser an der zentralen Abtriebswelle abgestützt ist beziehungsweise die Abtriebswelle lagert. An äußeren Umfangsflächen der Zentralnabe sind mindestens zwei Lager vorgesehen, mit welchen die Zentralnabe und die Dämpfernabe zueinander gelagert sind. Weiter ist die Dämpfernabe an einem Außendurchmesser mit zumindest einem Lager am Gehäuse abgestützt. Somit sind die Dämpfernabe und Zentralnabe relativ zueinander gelagert und gemeinsam am Gehäuse beziehungsweise Abtriebswelle abgestützt. Durch einen derartigen Aufbau kann zum einen die Stützweite der Lagerung vergrößert werden und/oder der benötigte Bauraum in axialer Richtung verringert werden. Weiter kann der Verschleiß der Lager verringert werden, da abhängig von der Betriebsart des Hybridmoduls keine relative Bewegung zwischen einzelnen Bauteilen erfolgt, da diese eine gleiche Drehzahl aufweisen. Durch die ineinander verschachtelte Anordnung der Lager wird auch eine sequenzielle Montage beziehungsweise eine Vormontage von Baugruppen begünstigt, wodurch der Montageprozess vereinfacht werden kann.

Ausführungsformen erfindungsgemäßer Hybridmodule sind dadurch gekennzeichnet, dass das Wandlergehäuse über ein weiteres Lager am Gehäuse oder der Abtriebswelle abgestützt ist. Das Wandlergehäuse ist mit der Zentralnabe verbunden und kann über dieses gelagert sein. Aufgrund der Größe des Wandlergehäuses und seiner axialen Erstreckung ist jedoch vorteilhafter Weise ein weiteres Lager bevorzugt an dem der Zentralnabe abgewandten axialen Ende des Wandlergehäuses vorgesehen. Dieses Lager ist bevorzugt am Gehäuse abgestützt. Alternativ wäre auch eine Abstützung an der Abtriebswelle oder beides möglich.

Hybridmodul gemäß erfindungsgemäßem Ausführungsformen sind dadurch gekennzeichnet, dass die Lager als Wälzlager ausgebildet sind. Hier kommen insbesondere Kugellager, Rollenlager oder Nadellager zum Einsatz, welche relativ günstig sind und eine zuverlässige sowie reibungsarme Lagerung ermöglichen.

Erfindungsgemäße Ausführungsformen eines Hybridmoduls sind dadurch gekennzeichnet, dass das Lager zwischen Gehäuse und Dämpfernabe, ein Lager zwischen Dämpfernabe und Zentralnabe und das Lager zwischen Zentralnabe und Abtriebswelle jeweils zumindest für eine Lagerung in radialer Richtung ausgebildet sind, und dass mindestens zwei dieser Lager zumindest teilweise überlappend angeordnet sind. Zwischen den ineinander verschachtelten Bauteilen nehmen die Lager zumindest radiale Kräfte auf. Um den Kraftfluss der Lagerkräfte durch die Bauteile zu verbessern und damit eine zusätzliche Belastung einzelner Bauteile, wie der Dämpfernabe, durch die Lagerkräfte von an ihnen abgestützter Bauteile, wie der Zentralnabe, gering zu halten, sind zumindest zwei Lager zueinander zumindest teilweise überlappend angeordnet. Anders ausgedrückt liegt zumindest ein Teil der axialen Erstreckung der Lager in einer gleichen radialen Ebene. Ein weiterer Vorteil liegt in der möglichen Verringerung des benötigten axialen Bauraums.

Bevorzugte Ausführungsformen erfindungsgemäßer Hybridmodule sind dadurch gekennzeichnet, dass alle drei Lager zumindest teilweise überlappend angeordnet sind. Eine weitere Verbesserung des Kraftflusses der Lagerkräfte sowie gegebenenfalls des benötigten Bauraums lässt sich erreichen, wenn alle drei Lager, also das Lager zwischen Gehäuse und Dämpfernabe, ein Lager zwischen Dämpfernabe und Zentralnabe und das Lager zwischen Zentralnabe und Abtriebswelle, einander überlappen.

Weitere bevorzugte Ausführungsformen erfindungsgemäßer Hybridmodule sind dadurch gekennzeichnet, dass sich die überlappenden Lager vollständig überdecken. Eine möglichst weitgehende Überlappung ist vorteilhaft. Daher ist eine vollständige Überdeckung, bei der Lager mit geringerer oder gleicher axialer Erstreckung vollständig zwischen von axialen Enden eines breiteren Lagers definierten radialen Ebenen angeordnet ist, wodurch der Kraftfluss der Lagerkräfte durch die Bauteile verbessert ist.

Erfindungsgemäße Hybridmodule gemäß Ausführungsformen sind dadurch gekennzeichnet, dass das Lager zwischen Gehäuse und Dämpfernabe sowohl in radialer als auch in axialer Richtung lagernd ausgebildet ist. Um axiale Kräfte aufnehmen und an das Gehäuse übertragen zu können, ist das Lager zwischen Dämpfernabe und Gehäuse entsprechend ausgeführt, vorzugsweise als ein entsprechendes Wälzlager, wie Rillenkugellager, Schrägkugellager, Vier-Punkt-Lager, Kegelrollenlager, Kreuzrollenlager und dergleichen.

Ausführungsformen erfindungsgemäßer Hybridmodule sind dadurch gekennzeichnet, dass ein Lager zwischen Dämpfernabe und Zentralnabe sowohl in radialer als auch in axialer Richtung lagernd ausgebildet ist. Um auftretende Axialkräfte aufnehmen zu können ist zumindest eines der Lager zwischen Dämpfernabe und Zentralnabe, vorzugsweise als Wälzlager, entsprechend ausgeführt.

In alternativen Ausführungsformen erfindungsgemäßer Hybridmodule sind dadurch gekennzeichnet, dass zwischen Dämpfernabe und Zentralnabe ein Axiallager angeordnet ist. Anstelle eines Lagers, welches sowohl radiale als auch axiale Kräfte aufnehmen kann, kann auch zumindest ein Axiallager vorgesehen werden, durch welches die axialen Lagerkräfte aufgenommen werden.

Erfindungsgemäße Hybridmodule sind in Ausführungsformen dadurch gekennzeichnet, dass die Dämpfernabe über einen Schwingungsdämpfer mit dem Verbrennungsmotor verbunden ist, dass ein Lager zwischen Dämpfernabe und Zentralnabe in radialer Richtung lagernd ausgebildet ist, und dass das Lager zumindest teilweise mit dem Schwingungsdämpfer überlappend angeordnet ist. Um unerwünschte Drehschwingungen im Antriebsstrang, welche insbesondere durch als Kolbenmaschinen ausgeführte Verbrennungsmotoren auftreten, zu reduzieren, wird vorzugsweise zwischen Verbrennungsmotor und Dämpfernabe ein bekannter Schwingungsdämpfer vorgesehen. Dieser Schwingungsdämpfer ist, vorzugsweise über eine Außenverzahnung an der Dämpfernabe, mit dieser drehfest verbunden. Um auftretende Kräfte möglichst gut aufzunehmen und die Bauteilbelastung gering zu halten, ist daher ein die Dämpfernabe an der Zentralnabe abstützendes Lager überlappend mit dem Schwingungsdämpfer angeordnet. Anders ausgedrückt, liegt zumindest ein Teil der axialen Erstreckung des Lagers und der axialen Erstreckung des Schwingungsdämpfers, insbesondere der Verbindung zwischen Dämpfernabe und Schwingungsdämpfer, in einer gleichen radialen Ebene. Bevorzugt wird das Lager vollständig überdeckt.

Ein weiterer Aspekt der Erfindung ist ein Antriebsstrang für ein Fahrzeug gekennzeichnet durch ein Hybridmodul gemäß den obigen Ausführungsformen.

Die Ausführungsformen sind nicht auf die obigen Beispiele beschränkt und können durch weitere entsprechende Ausbildungen erreicht werden. Die Merkmale der Ausführungsformen können beliebig miteinander kombiniert werden.

Im Folgenden wird die Erfindung anhand von Figuren näher erläutert. Gleiche oder ähnliche Elemente werden mit einheitlichen Bezugszeichen bezeichnet. Die Figuren zeigen im Einzelnen:
- Fig. 1: zeigt einen schematischen Schnitt eines erfindungsgemäßen Hybridmoduls.
- Fig. 2: zeigt einen schematischen Schnitt eines Teilbereichs eines erfindungsgemäßen Hybridmoduls.
- Fig. 3: zeigt einen schematischen Schnitt eines erfindungsgemäßen Hybridmoduls.

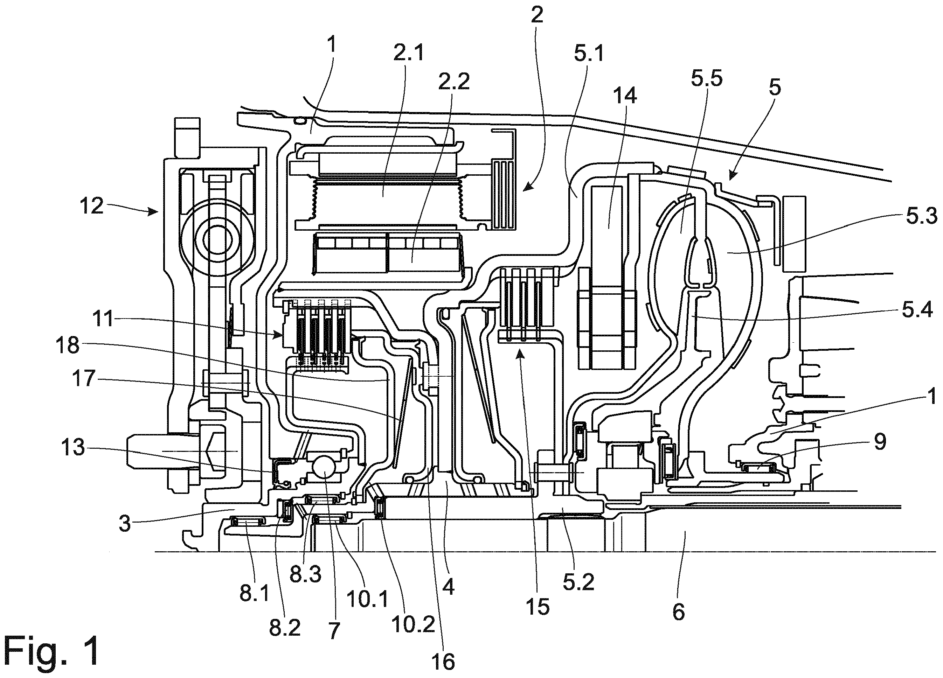

Fig. 1 zeigt ein Hybridmodul gemäß einem Ausführungsbeispiel in einer schematischen Schnittdarstellung, bei der eine Hälfe aufgrund von Symmetrie weggelassen wurde. Das Hybridmodul umfasst ein Gehäuse (1), innerhalb dem eine elektrische Maschine (2) mit einem gegenüber dem Gehäuse (1) drehfesten Stator (2.1) und einem drehbaren Rotor (2.2) angeordnet ist. Der Rotor (2.2) der elektrischen Maschine (2) ist mit dem Wandlergehäuse (5.1) sowie mit einem Rotorträger, welcher ebenfalls am Wandlergehäuse (5.1) angebunden ist, fest verbunden.

Innerhalb des Gehäuses (1) ist auch eine Kupplung (11) vorgesehen, mit welcher der Verbrennungsmotor vom weiteren Antriebsstrang getrennt werden kann. Die Kupplung (11) ist hierzu zwischen der Dämpfernabe (3) und der Zentralnabe (4) angeordnet oder genauer der Kupplungsteile sind entsprechend mit der Dämpfernabe (3) beziehungsweise mit der Zentralnabe (4) verbunden. Die Kupplung (11) wird durch einen Betätigungskolben (16) betätigt, wodurch eine Kraftübertragung über die Kupplung (11) erfolgen kann. Um von einem betätigten Zustand wieder sicher in einen getrennten Zustand wechseln zu können, ist zumindest ein Rückstellelement (17) vorgesehen, welches den Betätigungskolben (16) entgegen der Betätigungsrichtung zurückstellt. Das Rückstellelemente (17) stützt sich an einer Stauscheibe (18) ab und ist im dargestellten Ausführungsbeispiel als Membranfeder oder Tellerfeder ausgeführt, wobei auch andere Bauformen möglich sind.

Das Hybridmodul weist einen Drehmomentwandler (5) auf. Ein Pumpenrad (5.3) des Drehmomentwandlers (5) ist mit einem Wandlergehäuse (5.1) des Drehmomentwandlers (5) fest verbunden. Ein Leitrad (5.4) des Drehmomentwandlers (5) ist über einen Freilauf in einer Drehrichtung drehfest abgestützt. Ein Turbinenrad (5.5) des Drehmomentwandlers (5) ist mit einer Turbinenwelle (5.2) des Drehmomentwandlers (5) verbunden. Das Hybridmodul weist ferner einen zusätzlichen, optionalen Drehschwingungstilger (14) auf, welcher innerhalb und am Wandergehäuses (5.1) angeordnet ist. Die Turbinenwelle (5.2) ist mit einer Abtriebswelle (6) eines nicht näher dargestellten Automatikgetriebes verbunden. Innerhalb des Wandlergehäuses (5.1) ist ferner eine Überbrückungskupplung (15) angeordnet. Durch Schließen der Überbrückungskupplung (15) ist das Wandlergehäuse (5.1) mit der Turbinenwelle (5.2) direkt verbindbar. Der Aufbau für eine Betätigung der Überbrückungskupplung (15) ist hier analog zu der Betätigung der Kupplung (11) ausgeführt, wobei auch unterschiedliche Ausführungen möglich sind.

Die Zentralnabe (4) ist als Hohlwelle ausgebildet, welche koaxial zur Abtriebswelle (6) und diese umhüllend angeordnet ist. Zwischen der Abtriebswelle (6) und der Zentralnabe (4) ist ein Lager (10.1) vorgesehen, welches zumindest in radialer Richtung Lagerkräfte aufnehmen kann. Beim in Fig. 1 dargestellten Beispiel ist zusätzlich zwischen der Zentralnabe (4) und der, mit der Abtriebswelle (6) drehfest verbundenen, Turbinenwelle (5.2) ein Axiallager (10.2) vorgesehen. Auf ihrer Außenseite ist die Zentralnabe (4) mit dem Wandlergehäuse (5.1) verbunden sowie mit einer Seite der Kupplung (11). Zur weiteren Lagerung der Zentralnabe (4) beziehungsweise der Dämpfernabe (3) sind zwischen der Zentralnabe (4) und der Dämpfernabe (3) mehrere Lager (8.1; 8.2; 8.3) vorgesehen, wobei zumindest zwei der Lager (8.1; 8.3) Lagerkräfte in radialer Richtung aufnehmen können. Im gezeigten Ausführungsbeispiel ist auch zwischen Dämpfernabe (3) und Zentralnabe (4) ein zusätzliches Axiallager (8.2) vorgesehen, um axiale Lagerkräfte aufzunehmen. Am der Dämpfernabe (3) abgewandten axialen Ende des Drehmomentwandler (5) ist ein weiteres Lager (9) zwischen Wandlergehäuse (5.1) und Gehäuse (1) vorgesehen, um den Drehmomentwandler (5) auf einer möglichst breiten Basis zu lagern und damit die auftretenden Lagerkräfte gering zu halten. Alternativ oder kumulativ könnte das weitere Lager des Wandlergehäuses (5.1) zwischen Wandlergehäuse (5.1) und der Abtriebswelle (6) angeordnet sein, wobei hier auch die weitere nicht dargestellte Lagerung der Abtriebswelle (6) insbesondere hinsichtlich einer eventuell überbestimmten Lagerung betrachtet werden muss.

Alle bisher erläuterten Lager (8.1; 8.2; 8.3; 9; 10.1; 10.2) des Hybridmoduls der in Fig. 1 gezeigten Ausführungsform sind als Rollenlager beziehungsweise Nadellager ausgeführt, wobei auch andere Bauformen von Lagern möglich sind, bei denen gegebenenfalls neben radialen auch axiale Kräfte aufgenommen werden können. Zwischen der Dämpfernabe (3) und dem Gehäuse (1) ist ebenfalls ein Lager (7) vorgesehen, welches in diesem Beispiel als Rillenkugellager ausgeführt ist und somit radiale als auch axiale Lagerkräfte aufnehmen kann, auch hier sind verschiedene andere Bauarten von Wälzlagern möglich.

Für einen optimierten Kraftfluss durch die Bauteile sind in Fig. 1 die Lager (7; 8.3; 10.1) bezüglich ihrer Position entlang der Drehachse des Hybridmoduls radial zumindest teilweise überlappend angeordnet. Hierbei überdeckt sich das Lager (7) zwischen Gehäuse (1) und Dämpfernabe (3) weitgehend vollständig mit dem Lager (8.3) zwischen Dämpfernabe (3) und Zentralnabe (4). Das Lager (10.1) überlappt die beiden anderen Lager (7; 8.3) zum größtem Teil. Bei entsprechender Ausgestaltung der Bauteile können sich auch alle drei Lager (7; 8.3; 10.1) vollständig überdecken, was hinsichtlich Kraftfluss und Bauraum vorteilhaft sein kann. Insbesondere in Hinblick auf den Bauraum können allerdings auch Ausführungen, bei denen sich die Lager (7; 8.3; 10.1) nicht oder nur teilweise überlappen Vorteile haben.

Das Gehäuse (1) trennt einen Nassraum des Hybridmoduls von einem Trockenraum. Die Abdichtung des Nassraums zum Trockenraum erfolgt über eine Dichtung (13), welche, vorzugsweise unmittelbar, neben dem Lager (7) angeordnet ist.

Auf der Dämpfernabe (3) ist an Schwingungsdämpfer (12) vorgesehen, welcher mit einem nicht dargestellten Verbrennungsmotor verbunden ist. Durch den Schwingungsdämpfer (12) werden eventuelle Torsionsschwingungen reduziert, um dem Hybridmodul ein möglichst gleichförmiges Drehmoment beziehungsweise Drehbewegung zuzuführen. Gleichzeitig können durch den Schwingungsdämpfer Lage- und Ausrichtungstoleranzen zwischen Verbrennungsmotor und Hybridmodul ausgeglichen werden. Ein Lager (8.1) zwischen Dämpfernabe (3) und Zentralnabe (4) weist in diesem Beispiel eine soweit in Richtung des Verbrennungsmotors geschobene Position auf, dass das Lager (8.1) in radialer Richtung mit dem Schwingungsdämpfer (12), hier nahezu vollständig, überlappt.

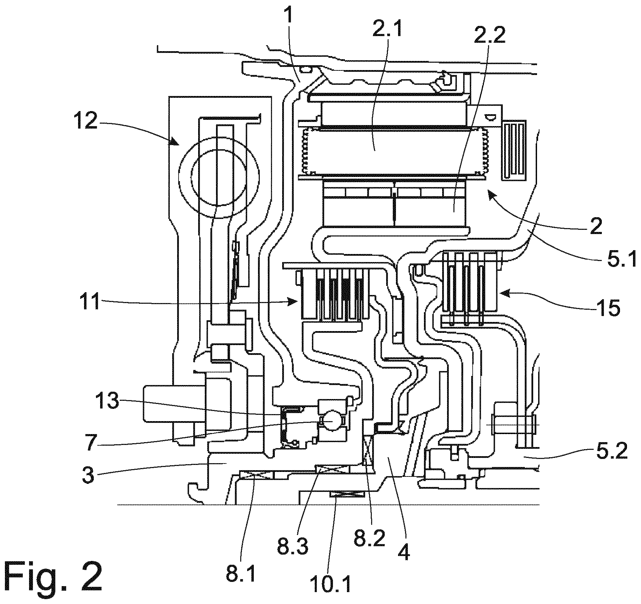

Fig. 2 zeigt einen Teilbereich eines erfindungsgemäßen Hybridmoduls in einem weiteren Ausführungsbeispiel. In Fig. 2 ist jedoch nur der Bereich um die elektrische Maschine (2) dargestellt sowie die Abtriebswelle (6) in der Darstellung weggelassen worden. Der grundlegende Aufbau stimmt mit Fig. 1 überein, weshalb auf die obige Beschreibung verwiesen wird.

Ein Unterschied liegt in der Anordnung der Lager (8.1; 8.2; 8.3) zwischen der Dämpfernabe (3) und der Zentralnabe (4), bei der das Axiallager (8.2) weiter ins Gehäuse (1), an eine Position mit mehr radialem Bauraum verschoben vorgesehen ist. Die Lager (8.1; 8.2; 8.3) sind hier nur durch stilisierte Platzhalter für verschiedene Bauformen dargestellt. Des Weiteren ist zwischen der Zentralnabe (4) und der in Fig. 2 nicht dargestellten Abtriebswelle (6) nur ein Lager (10.1) vorgesehen. Auf ein separates Axiallager (10.2), wie in Fig. 1, wurde verzichtet, wodurch die Teilezahl verringert werden kann und entsprechend mehr Bauraum zur Verfügung steht beziehungsweise weniger benötigt wird.

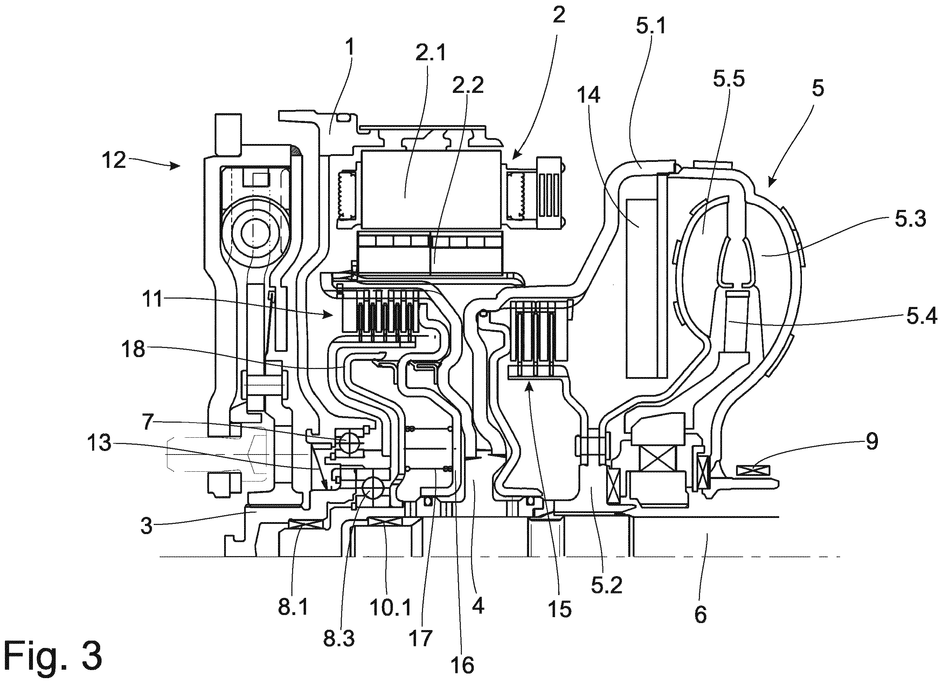

Auch Fig. 3 zeigt ein weiteres Ausführungsbeispiel eines erfindungsgemäßen Hybridmoduls analog zu Fig. 1 dargestellt. Der grundlegende Aufbau ist auch hier gleich, weshalb ebenfalls auf die obige Beschreibung verwiesen wird. Abweichend ist das Rückstellelement (17) für den Betätigungskolben (16) der Kupplung (11) durch Schraubenfedern gebildet. Des Weiteren wurde die Überbrückungskupplung (15) ohne Rückstellelement ausgeführt, da hier bereits durch den im Drehmomentwandler (5) herrschenden Druck der Bedarf geringer ist und dadurch axialer Bauraum eingespart werden kann. Bei diesem Ausführungsbeispiel ist das Lager (7) zwischen Gehäuse (1) und Dämpfernabe (3) ebenfalls als Kugellager ausgeführt.

Entgegen den Beispielen aus Fig. 1 und Fig. 2 sind zwischen Dämpfernabe (3) und Zentralnabe (4) jedoch nur zwei Lager (8.1; 8.3) vorgesehen. Anstelle eines separaten Axiallagers (8.2) ist eines der Lager (8.3) in diesem Ausführungsbeispiel ebenfalls als Kugellager ausgeführt, um sowohl radiale als auch axiale Lagerkräfte aufnehmen zu können. Die beiden Lager (8.1; 8.3) sind im Vergleich zu den anderen gezeigten Ausführungsbeispielen auch axial weiter vom Verbrennungsmotor entfernt angeordnet. Hierdurch überlappt das eine Lager (8.3) nur noch gering mit dem Lager (7) zwischen Dämpfernabe (3) und Gehäuse (1) beziehungsweise das weitere Lager (8.1) mit dem Schwingungsdämpfer (12).

Das Lager (10.1) zwischen Zentralnabe (4) und Abtriebswelle (6) ist ebenfalls axial weiter vom Verbrennungsmotor entfernt angeordnet, weshalb es zwar noch zu einem Teil mit dem Lager (8.3) zwischen Zentralnabe (4) und Dämpfernabe (3) überlappt, allerdings nicht mehr mit dem Lager (7) zwischen Dämpfernabe (3) und Gehäuse (1). Auch ist in wie beim in Fig. 2 gezeigten Ausführungsbeispiel nur ein Lager (10.1) zwischen Zentralnabe (4) und Abtriebswelle (6) vorgesehen.

Die Erfindung ist nicht auf die beschriebenen Ausführungen eingeschränkt. Es können wie oben ausgeführt, auch nur einzelne vorteilhafte Merkmale vorgesehen werden. Der Schutzumfang der Erfindung ist durch die Anspruche definiert.

### Bezugszeichen

- 1: Gehäuse
- 2: elektrische Maschine
- 2.1: Stator
- 2.2: Rotor
- 3: Dämpfernabe
- 4: Zentralnabe
- 5: Drehmomentwandler
- 5.1: Wandlergehäuse
- 5.2: Turbinenwelle
- 5.3: Pumpenrad
- 5.4: Leitrad
- 5.5: Turbinenrad
- 6: Abtriebswelle
- 7: Lager (Dämpfernabe/Gehäuse)
- 8.1; 8.2; 8.3: Lager (Zentralnabe/Dämpfernabe)
- 9: Lager (Wandlergehäuse)
- 10.1; 10.2: Lager (Abtriebswelle/Zentralnabe)
- 11: Kupplung
- 12: Schwingungsdämpfer
- 13: Dichtung
- 14: Drehschwingungstilger
- 15: Überbrückungskupplung
- 16: Betätigungskolben
- 17: Rückstellelement
- 18: Stauscheibe

## Patentansprüche

1. Hybridmodul umfassend eine Dämpfernabe (3), welche mit einem Verbrennungsmotor verbunden ist, ein Gehäuse (1), eine Kupplung (11), eine elektrische Maschine (2), welche einen Rotor (2.2) und einen mit dem Gehäuse (1) verbundenen Stator (2.1) aufweist, einen Drehmomentwandler (5), welcher ein mit einer Zentralnabe (4) verbundenes Wandlergehäuse (5.1) und eine Turbinenwelle (5.2) aufweist, und eine Abtriebswelle (6), wobei der Rotor (2.2) der elektrischen Maschine (2) mit der Zentralnabe (4) oder dem Wandlergehäuse (5.1) verbunden ist, wobei die Turbinenwelle (5.2) drehfest mit der Abtriebswelle (6) verbunden ist, und wobei die Kupplung (11) zwischen der Dämpfernabe (3) und dem Drehmomentwandler (5) angeordnet ist, **dadurch gekennzeichnet, dass** die Zentralnabe (4) über zumindest ein Lager (10.1; 10.2) an der Abtriebswelle (6) abgestützt ist und über zumindest zwei Lager (8.1; 8.2; 8.3) an der Dämpfernabe (3) abgestützt ist, und dass die Dämpfernabe (3) mit zumindest einem Lager (7) am Gehäuse (1) abgestützt ist.

2. Hybridmodul nach Anspruch 1, **dadurch gekennzeichnet, dass** das Wandlergehäuse (5.1) über ein weiteres Lager (9) am Gehäuse (1) oder der Abtriebswelle (6) abgestützt ist.

3. Hybridmodul nach Anspruch 1 oder 2, **dadurch gekennzeichnet, dass** die Lager (7; 8.1; 8.2; 8.3; 9; 10.1; 10.2) als Wälzlager ausgebildet sind.

4. Hybridmodul nach einem der vorangegangenen Ansprüche, **dadurch gekennzeichnet, dass** das Lager (7) zwischen Gehäuse (1) und Dämpfernabe (3), ein Lager (8.3) zwischen Dämpfernabe (3) und Zentralnabe (4) und das Lager (10.1) zwischen Zentralnabe (4) und Abtriebswelle (6) jeweils zumindest für eine Lagerung in radialer Richtung ausgebildet sind, und dass mindestens zwei dieser Lager (7; 8.3; 10.1) zumindest teilweise überlappend angeordnet sind.

5. Hybridmodul nach Anspruch 4, **dadurch gekennzeichnet, dass** alle drei Lager (7; 8.3; 10.1) zumindest teilweise überlappend angeordnet sind.

6. Hybridmodul nach Anspruch 4 oder 5, **dadurch gekennzeichnet, dass** sich die überlappenden Lager (7; 8.3; 10.1) vollständig überdecken.

7. Hybridmodul nach einem der vorangegangenen Ansprüche, **dadurch gekennzeichnet, dass** das Lager (7) zwischen Gehäuse (1) und Dämpfernabe (3) sowohl in radialer als auch in axialer Richtung lagernd ausgebildet ist.

8. Hybridmodul nach einem der vorangegangenen Ansprüche, **dadurch gekennzeichnet, dass** ein Lager (8.3) zwischen Dämpfernabe (3) und Zentralnabe (4) sowohl in radialer als auch in axialer Richtung lagernd ausgebildet ist.

9. Hybridmodul nach einem der Ansprüche 1 bis 7, **dadurch gekennzeichnet, dass** zwischen Dämpfernabe (3) und Zentralnabe (4) ein Axiallager (8.2) angeordnet ist.

10. Hybridmodul nach einem der vorangegangenen Ansprüche, **dadurch gekennzeichnet, dass** die Dämpfernabe (3) über einen Schwingungsdämpfer (12) mit dem Verbrennungsmotor verbunden ist, dass ein Lager (8.1) zwischen Dämpfernabe (3) und Zentralnabe (4) in radialer Richtung lagernd ausgebildet ist, und dass das Lager (8.1) zumindest teilweise mit dem Schwingungsdämpfer (12) überlappend angeordnet ist.

11. Antriebsstrang für ein Fahrzeug **gekennzeichnet durch** ein Hybridmodul gemäß einem der Ansprüche 1 bis 10.

## Claims

1. Hybrid module comprising a damper hub (3), which is connected to an internal combustion engine, a housing (1), a clutch (11), an electric machine (2), which has a rotor (2.2) and a stator (2.1) connected to the housing (1), a torque converter (5), which has a converter housing (5.1), connected to a central hub (4), and a turbine shaft (5.2), and an output shaft (6), wherein the rotor (2.2) of the electric machine (2) is connected to the central hub (4) or the converter housing (5.1), wherein the turbine shaft (5.2) is connected to the output shaft (6) for conjoint rotation, and wherein the clutch (11) is arranged between the damper hub (3) and the torque converter (5), **characterized in that** the central hub (4) is supported on the output shaft (6) via at least one bearing (10.1; 10.2) and on the damper hub (3) via at least two bearings (8.1; 8.2; 8.3), and **in that** the damper hub (3) is supported on the housing (1) by at least one bearing (7).

2. Hybrid module according to Claim 1, **characterized in that** the converter housing (5.1) is supported on the housing (1) or the output shaft (6) via a further bearing (9).

3. Hybrid module according to Claim 1 or 2, **characterized in that** the bearings (7; 8.1; 8.2; 8.3; 9; 10.1; 10.2) are designed as rolling bearings.

4. Hybrid module according to one of the preceding claims, **characterized in that** the bearing (7) between the housing (1) and the damper hub (3), one bearing (8.3) between the damper hub (3) and the central hub (4) and the bearing (10.1) between the central hub (4) and the output shaft (6) are in each case designed for providing at least bearing in the radial direction, and **in that** at least two of these bearings (7; 8.3; 10.1) are arranged at least partially overlapping.

5. Hybrid module according to Claim 4, **characterized in that** all three bearings (7; 8.3; 10.1) are arranged at least partially overlapping.

6. Hybrid module according to Claim 4 or 5, **characterized in that** the overlapping bearings (7; 8.3; 10.1) are completely congruent with one another.

7. Hybrid module according to one of the preceding claims, **characterized in that** the bearing (7) between the housing (1) and the damper hub (3) is designed as bearing both in the radial direction and in the axial direction.

8. Hybrid module according to one of the preceding claims, **characterized in that** one bearing (8.3) between the damper hub (3) and the central hub (4) is designed as bearing both in the radial direction and in the axial direction.

9. Hybrid module according to one of Claims 1 to 7, **characterized in that** an axial bearing (8.2) is arranged between the damper hub (3) and the central hub (4).

10. Hybrid module according to one of the preceding claims, **characterized in that** the damper hub (3) is connected to the internal combustion engine via a vibration damper (12), **in that** one bearing (8.1) between the damper hub (3) and the central hub (4) is designed as bearing in the radial direction, and **in that** the bearing (8.1) is arranged at least partially overlapping with the vibration damper (12).

11. Drivetrain for a vehicle **characterized by** a hybrid module according to one of Claims 1 to 10.

## Revendications

1. Module hybride comprenant un moyeu amortisseur (3), qui est relié à un moteur à combustion interne, un boîtier (1), un embrayage (11), une machine électrique (2), qui présente un rotor (2.2) et un stator (2.1) relié au boîtier (1), un convertisseur de couple de rotation (5), qui présente un boîtier de convertisseur (5.1) relié à un moyeu central (4) et un arbre de turbine (5.2), et un arbre de sortie (6), le rotor (2.2) de la machine électrique (2) étant relié au moyeu central (4) ou au boîtier de convertisseur (5.1), l'arbre de turbine (5.2) étant relié de manière immobile en rotation à l'arbre de sortie (6), et l'embrayage (11) étant agencé entre le moyeu amortisseur (3) et le convertisseur de couple de rotation (5), **caractérisé en ce que** le moyeu central (4) est soutenu par l'intermédiaire d'au moins un palier (10.1 ; 10.2) sur l'arbre de sortie (6) et est soutenu par l'intermédiaire d'au moins deux paliers (8.1 ; 8.2 ; 8.3) sur le moyeu amortisseur (3), et **en ce que** le moyeu amortisseur (3) est soutenu par au moins un palier (7) sur le boîtier (1).

2. Module hybride selon la revendication 1, **caractérisé en ce que** le boîtier de convertisseur (5.1) est soutenu par l'intermédiaire d'un autre palier (9) sur le boîtier (1) ou l'arbre de sortie (6) .

3. Module hybride selon la revendication 1 ou 2, **caractérisé en ce que** les paliers (7 ; 8.1 ; 8.2 ; 8.3 ; 9 ; 10.1 ; 10.2) sont configurés sous forme de paliers à roulement.

4. Module hybride selon l'une quelconque des revendications précédentes, **caractérisé en ce que** le palier (7) entre le boîtier (1) et le moyeu amortisseur (3), un palier (8.3) entre le moyeu amortisseur (3) et le moyeu central (4) et le palier (10.1) entre le moyeu central (4) et l'arbre de sortie (6) sont configurés chacun au moins pour un support dans la direction radiale, et **en ce qu'**au moins deux de ces paliers (7 ; 8.3 ; 10.1) sont agencés au moins partiellement en chevauchement.

5. Module hybride selon la revendication 4, **caractérisé en ce que** les trois paliers (7 ; 8.3 ; 10.1) sont agencés au moins partiellement en chevauchement.

6. Module hybride selon la revendication 4 ou 5, **caractérisé en ce que** les paliers (7 ; 8.3 ; 10.1) en chevauchement se recouvrent entièrement.

7. Module hybride selon l'une quelconque des revendications précédentes, **caractérisé en ce que** le palier (7) entre le boîtier (1) et le moyeu amortisseur (3) est configuré pour supporter aussi bien dans la direction radiale qu'axiale.

8. Module hybride selon l'une quelconque des revendications précédentes, **caractérisé en ce qu'**un palier (8.3) entre le moyeu amortisseur (3) et le moyeu central (4) est configuré pour supporter aussi bien dans la direction radiale qu'axiale.

9. Module hybride selon l'une quelconque des revendications 1 à 7, **caractérisé en ce qu'**un palier axial (8.2) est agencé entre le moyeu amortisseur (3) et le moyeu central (4).

10. Module hybride selon l'une quelconque des revendications précédentes, **caractérisé en ce que** le moyeu amortisseur (3) est relié au moteur à combustion interne par l'intermédiaire d'un amortisseur de vibrations (12), **en ce qu'**un palier (8.1) entre le moyeu amortisseur (3) et le moyeu central (4) est configuré pour supporter dans la direction radiale, et **en ce que** le palier (8.1) est agencé au moins partiellement en chevauchement avec l'amortisseur de vibrations (12).

11. Chaîne cinématique pour un véhicule, **caractérisée par** un module hybride selon l'une quelconque des revendications 1 à 10.
